# EUROPÄISCHE PATENTSCHRIFT

(11) **EP 1 321 444 B1**
(45) Veröffentlichungstag und Bekanntmachung des Hinweises auf die Patenterteilung: **21.05.2008**
(21) Anmeldenummer: 02025670.7
(22) Anmeldetag: 20.11.2002
(51) Int. Cl.: C03C 17/25, C03C 17/23, C01B 33/18

(54) **Schicht erhalten aus einer wässerigen Dispersion enthaltend flammenhydrolytisch hergestelltes Silicium-Titan-Mischoxidpulver**
Layer obtained from an aqueous dispersion containing silicium-titanium mixed oxide powder produced by flame hydrolysis
Couche obtenue d'une dispersion aqueuse contenant d'une poudre d'oxyde mixte de silicium et de titane produit par hydrolyse à la flamme

(30) Priorität: 22.12.2001 DE 10163939
(43) Veröffentlichungstag der Anmeldung: 25.06.2003
(73) Patentinhaber: Evonik Degussa GmbH, 40474 Düsseldorf (DE)
(72) Erfinder: Oswald, Monika, Dr., 63454 Hanau (DE); Mangold, Helmut, Dr., 63517 Rodenbach (DE); Deller, Klaus, Dr., 63512 Hainburg (DE); Clasen, Rolf, Prof., 66125 Saarbrücken (DE); Hornfeck, Markus, Dr., 66440 Blieskastel (DE)

(56) Entgegenhaltungen:
- EP-A- 0 855 368
- DE-A- 4 235 996
- DE-A- 19 650 500
- PATENT ABSTRACTS OF JAPAN vol. 007, no. 109 (P-196), 12. Mai 1983 (1983-05-12) & JP 58 030710 A (NIPPON DENSHIN DENWA KOSHA), 23. Februar 1983 (1983-02-23)

## Beschreibung

Gegenstand der Erfindung ist eine Schicht, welche flammenhydrolytisch hergestelltes Silicium-Titan-Mischoxidpulver enthält, deren Herstellung und Verwendung Schichten, die Siliciumdioxid und Titandioxid enthalten sind bekannt. Sie werden in der Regel durch sogenannte Sol-Gel-Verfahren gewonnen, bei dem Silicium- und Titanalkoxide in einem organischen Lösungsmittel, gewöhnlich ein Alkohol, und Wasser gezielt hydrolysiert bzw. polymerisiert werden. Bei der Polymerisation entsteht zunächst ein Sol und mit steigender Vernetzung der polymeren Einheiten ein Gel. Dieses Sol kann zum Beispiel durch Tauchbeschichtung auf ein Substrat aufgebracht werden und durch nachfolgend thermische behandelt und gesintert werden.

Es ist auch möglich, dass die Titankomponente bereits als Titandioxid und nicht als Alkoxid zugesetzt wird. Auch kann die Siliciumkomponente zum Teil als Siliciumdioxid vorliegen.

Aufgrund des hohen Lösungsmittelanteils im Gel kann es auch bei extrem langsamer und vorsichtiger Trocknung zu starkem Schrumpf und Rissbildung kommen. Auf der anderen Seite ist es den niedrigen Feststoffanteil im Gel schwierig, mechanisch stabile, dicke Schichten zu bilden.

In der japanischen Offenlegungsschrift JP-58030710 wird ein Verfahren beschrieben, bei dem auf ein 1200 °C vorbeheiztes Substrat ein durch einen Flammenoxidationsprozess erhaltenes Silicium-Titan-Mischoxidpulver aufgebracht wird und durch nachfolgendes Schmelzen bei 1400 °C eine Schicht aus Silicium- und Titandioxid erhalten wird.

Unterschiedlich an diesem Verfahren ist, dass temperaturempfindliche Substrate nicht beschichtet werden können. Die eigentliche Schicht wird erst durch Schmelzen des aufgebrachten Silicium-Titan-Mischoxidpulvers erhalten.

Es ist ferner von Nachteil, dass anhaftende Chlorverbindungen aus den Einsatzstoffen mit in die Schicht eingeschlossen werden.

Aufgabe der Erfindung ist es eine Schicht auf einem Substrat bereitzustellen, die eine hohe mechanische Stabilität aufweist und frei von Rissen ist. Aufgabe der Erfindung ist ferner ein Verfahren zu deren Herstellung, das in einem einzigen Beschichtungsschritt zu rissfreien Schichten führt, wobei die Schichtdicke in weiten Grenzen variiert werden kann.

Gegenstand der Erfindung ist eine Schicht gemäß Anspruch 1. Dabei kann es sich um transparente oder opake Schichten handeln.

Unter wässeriger Dispersion ist eine Dispersion mit einem Pulveranteil von 0,1 bis 60 Gew.-% zu verstehen, wobei der bevorzugte Bereich zwischen 2 und 40 Gew.-% liegt. Die Dispersion kann darüberhinaus noch anorganische oder organische Additive aufweisen. So kann zum Beispiel der pH-Wert der Dispersion mit Tetramethylammoniumhydroxid oder Salzsäure eingestellt sein. Die Dispersion kann hergestellt werden nach dem Fachmann bekannten Methoden, wie zum Beispiel mittels eines Dissolvers, mittels Rotor/Stator, Rühwerkskugelmühlen oder Hochdruckhomogenisatoren, bei denen sich ein unter hohem Druck stehender vordispergierte Ströme selbst mahlen.

Unter flammenhydrolytisch ist hierbei die Hydrolyse von Silicium- und Titanverbindungen in der Gasphase in einer Flamme, erzeugt durch die Reaktion von Wasserstoff und Sauerstoff, zu verstehen. Dabei werden zunächst hochdisperse, nicht poröse Primärpartikel gebildet, die im weiteren Reaktionsverlauf zu Aggregaten und diese weiter zu Agglomeraten zusammenwachsen können. Je nach Wahl der Reaktionsbedingungen können bei der Synthese auch im wesentlichen sphärische Partikel erhalten werden.

Unter Mischoxid ist die innige Vermischung von Titandioxid und Siliciumdioxid auf atomarer Ebene unter Bildung von Si-O-Ti-Bindungen zu verstehen. Daneben können die Primärpartikel auch Bereiche von Siliciumdioxid neben Titandioxid aufweisen. Von den erfindungsgemäß eingesetzten Mischoxidpulvern zu unterscheiden sind physikalische Mischungen von Siliciumdioxid- und Titandioxidpulvern, deren Verwendung zur Herstellung der erfindungsgemäßen Schichten nicht geeignet sind. Zu unterscheiden sind auch Sole und Gele, die auch Si-O-Ti-Bindungen enthalten können, jedoch aufgrund ihrer porösen Struktur und der herstellungsbedingten niedrigen Füllgrade nicht zur Bildung der erfindungsgemäßen Schichten geeignet sind.

Das Pulver kann ferner Spuren von Verunreinigungen aus den Ausgangsstoffen, wie auch durch den Prozess hervorgerufene Verunreinigungen aufweisen. Diese Verunreinigungen können bis zu 0,5 Gew.-%, in der Regel jedoch nicht mehr als 100 ppm, betragen.

Silicium-Titan-Mischoxidpulver kann zum Beispiel nach der in DE-A-4235996 beschriebenen Methode hergestellt werden, indem Siliciumtetrachlorid und Titantetrachlorid vermischt und zusammen mit einem Wasserstoff-Luft-Gemisch verbrannt werden. Weiterhin kann ein Silicium-Titan-Mischoxidpulver nach der in DE-A-19650500 beschriebenen Methode hergestellt werden, unter der Maßgabe dass der Anteil der gewichtsmässig kleineren Mischoxidkomponente, entweder Siliciumdioxid oder Titandioxid, 20 Gew.-% nicht übersteigt. Im Falle, dass Titandioxid die gewichtsmäßig kleinere Komponente ist, wird ein durch Vernebelung erhaltenes Aerosol enthaltend die Lösung oder Suspension eines Salzes einer Titanverbindung in ein Gasgemisch enthaltend ein Siliciumtetrahalogenid, Wasserstoff und Luft eingespeist und mit diesem homogen vermischt und anschliessend das Aerosol-Gas-Gemisch innerhalb einer Brennkammer in einer Flamme zur Reaktion gebracht. Im Falle, dass Siliciumdioxid die gewichtsmäßig kleinere Komponente ist, enthält das Aerosol das Salz einer Siliciumverbindung und das Gasgemisch ein Titantetrahalogenid.

Als Substrate auf denen die Schicht aufgebracht ist, eignen sich Borosilikatglas, Kieselglas, Glaskeramik, Werkstoffe mit sehr niedrigen Ausdehnungskoeffizienten (Ultra Low Expansion-Werkstoffe), oder andere anorganische Substrate.

Unter thermischer Behandlung ist Tempern im Ofen, Flammensintern oder Lasersintern zu verstehen.

Die Schicht kann eine Schichtdicke zwischen 100 nm und 1 mm, bevorzugt zwischen 1 µm und 50 µm und besonders bevorzugt zwischen 5 µm und 15 µm, aufweisen.

Die BET-Oberfläche der für die Schicht verwendeten Pulver kann zwischen 5 und 500 m2/g liegen und wird über die Einstellung der Prozessparameter gesteuert. Besonders vorteilhaft sind Pulver mit BET-Oberflächen zwischen 20 und 50 m2/g.

Der Titandioxidgehalt des Pulvers kann zwischen 1 und 99 Gew.-% liegen. Besonders bevorzugt ist ein Bereich zwischen 2 und 12 Gew.-%.

Gemäß einer besonderen Ausführungsform kann die Schicht eine Mischung aus Pulvern mit hoher BET-Oberfläche mit mindestens 130 m2/g und solchen niedriger BET-Oberfläche mit höchstens 90 m2/g enthalten, bevorzugt mit hoher BET-Oberfläche mit mindestens 170 m2/g und solchen niedriger BET-Oberfläche mit höchstens 70 m2/g enthalten, wobei das Gewichtsverhältnis der Pulver mit niedriger zu hoher BET-Oberfläche zwischen 40:60 und 99,5:0,5 liegt.

Ein weiterer Gegenstand der Erfindung ist ein Verfahren zur Herstellung der Schicht, welches dadurch gekennzeichnet ist, dass auf ein Substrat eine Dispersion aufgebracht wird, die Silicium-Titan-Mischoxidpulver enthält, und die anschließend durch thermische Behandlung gesintert wird.

Als Substrat kann Borosilikatglas, Kieselglas, Glaskeramik, Werkstoffe mit sehr niedrigen Ausdehnungskoeffizienten (Ultra Low Expansion Werkstoffe), oder andere anorganische Substrate eingesetzt werden.

Die Dispersion kann von 0,1 bis 60 Gew.-% Pulver enthalten. Besonders bevorzugt ist ein Bereich zwischen 2 und 40 Gew.-%. Besonders für das Aufbringen dicker Schichten ist eine hochgefüllte Dispersion bevorzugt. Die Dispersion kann darüber hinaus noch anorganische oder organische Additive beinhalten. So kann zum Beispiel der pH-Wert der Dispersion mit Tetramethylammoniumhydroxid oder Salzsäure eingestellt sein.

Die Dispersion kann hergestellt werden nach dem Fachmann bekannten Methoden, wie zum Beispiel mittels eines Dissolvers, mittels Rotor/Stator, Rühwerkskugelmühlen oder Hochdruckhomogenisatoren, bei denen sich ein unter hohem Druck stehender vordispergierte Ströme selbst mahlen.

Das Aufbringen der Dispersion kann durch Tauchbeschichtung, Streichen, Sprühen oder Rakeln erfolgen. Besonders bevorzugt ist die Tauchbeschichtung.

Das Sprühen kann durch Druckzerstäubung der Suspension mittels eines Trägergases (z. B. Luft) oder durch Elektrosprühen erfolgen. Die Abscheidung der Sprühtröpfchen auf dem Substrat kann gegebenenfalls durch Anlegen eines elektrischen Feldes (elektrostatisches Spritzen) unterstützt werden.

Die thermische Behandlung kann zum Beispiel durch Tempern im Ofen, Flammensintern oder Lasersintern erfolgen.

Die erfindungsgemäßen Schichten können bei Werkstoffen mit sehr niedrigen Ausdehnungskoeffizienten (Ultra Low Expansion-Werkstoffe), für photokatalytische Anwendungen, als Beschichtung für selbstreinigende Spiegel (superhydrophiler Bestandteil), für optische Artikel wie Linsen, als Abdichtung für Gase und Flüssigkeiten, als mechanische Schutzschicht, in Verbundwerkstoffen Verwendung finden.

### Beispiele

### Beispiel 1: Niedrigoberflächiges Silicium-Titan-Mischoxidpulver

5,8 kg/h SiCl₄ und 0,37 kg/h TiCl₄ werden gemeinsam bei ca. 170 °C verdampft und in das Zentralrohr eines Brenners bekannter Bauart eingespeist. In diese Mischung werden zusätzlich 3,7 Nm³/h Wasserstoff sowie 6 Nm³/h Luft und 0,65 Nm³/h Sauerstoff eingespeist. Dieses Gasgemisch strömt aus der Brennerdüse und brennt in den Brennerraum eines wassergekühlten Flammrohres. In die Manteldüse, die die Zentraldüse umgibt, werden zur Vermeidung von Anbackungen zusätzlich 0,5 Nm³/h (Sekundär-)Wasserstoff und 0,3 Nm³/h Stickstoff eingespeist. Aus der Umgebung werden noch ca. 45 Nm³/h Luft in das unter leichtem Unterdruck stehende Flammrohr mit eingesaugt. Nach der Flammenhydrolyse werden die Reaktionsgase und das entstandene pyrogene Silicium-Titan-Mischoxidpulver durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Das pyrogene Silicium-Titan-Mischoxidpulver fällt als weißes feinteiliges Pulver an. In einem weiteren Schritt werden bei Temperaturen zwischen 400 und 700 °C durch Behandlung mit wasserdampfhaltiger Luft noch anhaftende Salzsäurereste von dem Mischoxidpulver entfernt.

Die BET-Oberfläche des Mischoxidpulvers beträgt 42 m²/g. Die analytische Zusammensetzung zeigt 92,67 Gew.-% SiO₂ und 7,32 Gew.-% TiO₂.

Die Herstellbedingungen sind in Tabelle 1 zusammengefaßt, weitere analytische Daten des so erhaltenen Silicium-Titan-Mischoxidpulvers sind in Tabelle 2 angegeben.

### Beispiel 2: Hochoberflächiges Silicium-Titan-Mischoxidpulver

5,8 kg/h SiCl₄ und 0,37 kg/h TiCl₄ werden gemeinsam bei ca. 170 °C verdampft und in das Zentralrohr eines Brenners bekannter Bauart eingespeist. In diese Mischung werden zusätzlich 2,0 Nm³/h Wasserstoff sowie 7,7 Nm³/h Luft eingespeist. Dieses Gasgemisch strömt aus der Brennerdüse und brennt in den Brennerraum eines wassergekühlten Flammrohres. In die Manteldüse, die die Zentraldüse umgibt, werden zur Vermeidung von Anbackungen zusätzlich 0,5 Nm³/h (Sekundär-) Wasserstoff und 0,3 Nm³/h Stickstoff eingespeist. Aus der Umgebung werden noch ca. 12 Nm³/h Luft in das unter leichtem Unterdruck stehende Flammrohr mit eingesaugt. Nach der Flammenhydrolyse werden die Reaktionsgase und das entstandene pyrogene Silicium-Titan-Mischoxidpulvers durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Das pyrogene Silicium-Titan-Mischoxidpulver fällt als weißes feinteiliges Pulver an. In einem weiteren Schritt werden bei Temperaturen zwischen 400 und 700 °C durch Behandlung mit wasserdampfhaltiger Luft noch anhaftende Salzsäurereste von dem Mischoxidpulver entfernt.

Die BET-Oberfläche des Mischoxidpulvers des Beispiels 2 beträgt 269 m²/g. Die analytische Zusammensetzung zeigt 92,68 Gew.-% SiO₂ und 7,32 Gew.-% TiO₂.

Die Herstellbedingungen sind in Tabelle 1 zusammengefaßt, weitere analytische Daten des so erhaltenen Silicium-Titan-Mischoxids sind in Tabelle 2 angegeben.

**Tabelle 1: Experimentelle Bedingungen bei der Herstellung der pyrogenen Silicium-Titan-Mischoxidpulver**

| Beispiel | | 1 | 2 |
|---|---|---|---|
| SiCl₄ | kg/h | 5,8 | 5,8 |
| TiCl₄ | kg/h | 0,37 | 0,37 |
| Primärluft | Nm³/h | 6 | 7,7 |
| O₂ zus. | Nm³/h | 0,65 | 0 |
| H₂ Kern | Nm³/h | 3,7 | 2,0 |
| H₂ Mantel | Nm³/h | 0,5 | 0,5 |
| vₖ (norm) | m/s | 23,9 | 22,6 |
| gamma Kern | - | 2,29 | 1,24 |
| lambda Kern | - | 1,03 | 1,61 |

Erläuterung: Primärluft = Luftmenge im Zentralrohr (Kern); O₂-zus. = zusätzlich in Kern eingespeister Sauerstoff; H₂-Kern = Wasserstoff in der Kerndüse; vₖ (norm) = auf Normzustand (273,15 K, 1 atm) bezogene Gasausströmgeschwindigkeit in der Kerndüse; gamma Kern = Wasserstoffverhältnis in der Kerndüse; lambda Kern = Sauerstoffverhältnis in der Kerndüse. Eine ausführliche Darstellung der Begriffe gamma und lambda und ihre Berechnung ist in EP-A-0855368 angegeben.

**Tabelle 2: Analytische Daten der nach Beispiel 1 und 2 erhaltenen Proben**

| Beispiel | BET-Oberfläche m²/g | pH (1) | Schüttdichte g/l | Stampfdichte g/l | Gehalt SiO₂ Gew.-% | Gehalt TiO₂ Gew.-% |
|---|---|---|---|---|---|---|
| 1 | 42 | 4,25 | 65 | 84 | 92,67 | 7,32 |
| 2 | 269 | 3,3 | 26 | 33 | 92,68 | 7,32 |

| | | | | | | |
|---|---|---|---|---|---|---|
| (1) 4% wäßrige Dispersion | | | | | | |

### Beispiel 3: Herstellung einer wässerigen Dispersion enthaltend das Mischoxidpulver aus Beispiel 1

90 g Wasser und 10,0 g Mischoxidpulver aus Beispiel 1 werden mittels eines Dissolvers dispergiert, und ca. 1 Stunde im Ultraschallbad behandelt. Anschließend wird die Dispersion durch ein 60 µm Sieb filtriert.

### Beispiel 4: Herstellung einer wässerigen Dispersionen enthaltend die Mischoxidpulver aus Beispiel 1 und 2

315 g Wasser und 10,5 g Mischoxidpulver aus Beispiel 2 und 24,5 g Mischoxidpulver aus Beispiel 1 werden mittels eines Dissolvers dispergiert, und ca. 1 Stunde im Ultraschallbad behandelt. Anschließend wurde die Dispersion durch ein 60 µm Sieb filtriert.

### Beispiel 5: Tauchbeschichtung von Borosilikatglas mittels der Dispersion aus Beispiel 4

Die Dispersion aus Beispiel 4 wird mittels Tauchbeschichtung auf ein Borosilikatglas aufgebracht. Die Eintauchgeschwindigkeit in die Dispersion beträgt 3 mm/s, Die Haltezeit in der Dispersion beträgt 5 s, die Ausfuhrgeschwindigkeit beträgt ebenfalls 3 mm/s. Die Trocknung erfolgt an Luft bei Raumtemperatur.

Die Sinterung der auf ca. 300°C vorgeheizten Proben erfolgt mittels eines Lasers (CO₂-Laser Rofin Sinar RS700 SM).

Die Laserleistung beträgt 590 W bei einer Frequenz der Spiegel von 540 U/min. Die Probe wird mit einer errechneten Geschwindigkeit von ca. 2,32 mm/sek unter dem Laserstrahl hindurch bewegt und nach dem Sintern langsam abgekühlt (Umluft-Ofen, 1 h halten bei 500°C, danach in 10 h auf Raumtemperatur abkühlen).

Die Dicke der transparenten Schicht wurde profilometrisch mit ca. 2,4 µm bestimmt. Die Schicht weist unter dem Lichtmikroskop keine Risse auf.

## Patentansprüche

1. Schicht, enthaltend Siliciumdioxid und Titandioxid, welche als Silicium-Titan-Mischoxidpulver auf ein Substrat aufgebracht und thermisch behandelt wird, **dadurch gekennzeichnet, dass** das Silicium-Titan-Mischoxidpulver flammenhydrolytisch hergestellt ist und als wässerige Dispersion aufgebracht wird und wobei die thermische Behandlung durch Tempern im Ofen, Flammensintern oder Lasersintern erfolgt.

2. Schicht nach Anspruch 1, **dadurch gekennzeichnet, dass** die Schichtdicke zwischen 100 nm und 1 mm, bevorzugt zwischen 1 µm und 50 µm, besonders bevorzugt zwischen 5 µm und 15 µm liegt.

3. Schicht nach den Ansprüchen 1 oder 2, **dadurch gekennzeichnet, dass** die BET-Oberfläche der Pulver zwischen 5 und 500 m2/g liegt.

4. Schicht nach den Ansprüchen 1 bis 3, **dadurch gekennzeichnet, dass** der Titandioxidgehalt des Pulvers zwischen 0,1 bis 99,9 Gew.-%, besonders bevorzugt zwischen 2 und 20 Gew.-%, liegt.

5. Schicht nach den Ansprüchen 1 bis 4, **dadurch gekennzeichnet, dass** sie eine Mischung aus Pulvern mit hoher BET-Oberfläche mit mindestens 130 m2/g und solchen niedriger BET-Oberfläche mit höchstens 80 m2/g enthält, bevorzugt mit hoher BET-Oberfläche mit mindestens 170 m2/g und solchen niedriger BET-Oberfläche mit höchstens 70 m2/g enthält, wobei das Gewichtsverhältnis der Pulver mit niedriger zu hoher BET-Oberfläche zwischen 40:60 und 99,5:0,5 liegt.

6. Verfahren zur Herstellung der Schicht gemäß den Ansprüchen 1 bis 5, **dadurch gekennzeichnet, dass** auf ein Substrat eine Dispersion aufgebracht wird, die Silicium-Titan-Mischoxidpulver enthält, und die anschließend durch thermische Behandlung gesintert wird.

7. Verwendung der Schicht gemäß den Ansprüchen 1 bis 4 für Werkstoffe mit sehr niedrigen Ausdehnungskoeffizienten wie Ultra Low Expansion-Werkstoffe, für photokatalytische Anwendungen, als Beschichtung für selbstreinigende Spiegel wie superhydrophiler Bestandteil, für optische Artikel wie Linsen, als Abdichtung für Gase und Flüssigkeiten, als mechanische Schutzschicht, in Verbundwerkstoffen.

## Claims

1. Layer containing silicon dioxide and titanium dioxide and applied to a substrate as silicon-titanium mixed oxide powder and thermally treated, **characterized in that** the silicon-titanium mixed oxide powder is prepared by flame hydrolysis and is applied as an aqueous dispersion and wherein the thermal treatment is effected by annealing in kilns, flame sintering or laser sintering.

2. Layer according to Claim 1, **characterized in that** the layer has a thickness between 100 nm and 1 mm, preferably between 1 µm and 50 µm and particularly preferably between 5 µm and 15 µm.

3. Layer according to Claim 1 or 2, **characterized in that** the BET surface area of the powders is between 5 and 500 m2/g.

4. Layer according to Claims 1 to 3, **characterized in that** the titanium dioxide content of the powder is between 0.1 to 99.9 wt.% and particularly preferably between 2 and 20 wt.%.

5. Layer according to Claims 1 to 4, **characterized in that** it contains a mixture of powders having a high BET surface area of at least 130 m2/g and those having a low BET surface area of at most 80 m2/g, preferably having a high BET surface area of at least 170 m2/g and those having a low BET surface area of at most 70 m2/g, wherein the ratio by weight of the powders with low to high BET surface area is between 40:60 and 99.5:0.5.

6. Process for producing the layer according to Claims 1 to 5, **characterized in that** a dispersion containing silicon-titanium mixed oxide powder is applied to a substrate and subsequently sintered by thermal treatment.

7. Use of the layer according to Claims 1 to 4 for materials with very low coefficients of expansion such as ultra-low expansion materials, for photocatalytic applications, as coatings for self-cleaning mirrors such as superhydrophilic constituent, for optical items such as lenses, as seals for gases and liquids, as mechanical protective layer, in composite materials.

## Revendications

1. Couche contenant du dioxyde de silicium et du dioxyde de titane qui est appliquée et traitée thermiquement sur un substrat sous la forme d'une poudre d'oxyde mixte de titane/silicium, **caractérisée en ce que** la poudre d'oxyde mixte de titane/silicium a été fabriquée par hydrolyse à la flamme et est appliquée sous la forme d'une dispersion aqueuse, le traitement thermique étant effectué par cuisson au four, frittage à la flamme ou frittage au laser.

2. Couche selon la revendication 1, **caractérisée en ce que** l'épaisseur de la couche se situe entre 100 nm et 1 mm, de préférence entre 1 µm et 50 µm, en particulier entre 5 µm et 15 µm.

3. Couche selon la revendication 1 ou 2, **caractérisée en ce que** la surface BET de la poudre se situe entre 5 et 500 m²/g.

4. Couche selon les revendications 1 à 3, **caractérisée en ce que** la teneur en dioxyde de titane de la poudre se situe entre 0,1 et 99,9 % en poids, en particulier entre 2 et 20 % en poids.

5. Couche selon les revendications 1 à 4, **caractérisée en ce qu'**elle contient un mélange de poudres avec une surface BET élevée d'au moins 130 m²/g et une surface BET faible d'au maximum 90 m²/g, de préférence avec une surface BET élevée d'au moins 170 m²/g et une surface BET faible d'au maximum 70 m²/g, le rapport pondéral de la poudre avec une surface BET faible/élevée se situant entre 40:60 et 99,5:0,5.

6. Procédé de préparation de la couche selon les revendications 1 à 5, **caractérisé en ce qu'**une dispersion qui contient une poudre d'oxyde mixte de silicium/titane et qui est ensuite frittée par traitement thermique est appliquée sur un substrat.

7. Utilisation de la couche selon les revendications 1 à 4 dans les matériaux composites pour des matériaux avec des coefficients de dilatation très faibles comme les matériaux ultra low expansion, pour des applications photocatalytiques, en tant que revêtement pour des miroirs autonettoyants comme composant superhydrophile, pour des articles optiques comme des lentilles, en tant que joint d'étanchéité pour les gaz et liquides, en tant que couche de protection mécanique.
